# DEMANDE DE BREVET EUROPEEN

(11) **EP 0 895 772 A1**
(43) Date de publication de la demande: **10.02.1999**
(21) Numéro de dépôt: 98401914.1
(22) Date de dépôt: 27.07.1998
(51) Int. Cl.: A61J 9/00, A47J 36/26

(54) **Dispositif de chauffage d'un biberon à fond métallique**

(30) Priorité: 07.08.1997 FR 9710151
(71) Demandeur: SEB S.A., 69130 Ecully (FR)
(72) Inventeur: Doumeng, Lionel, 74150 Marcellaz - Albanais (FR)
(74) Mandataire: Keib, Gérard

(57) **Abrégé**

Un dispositif de chauffage d'un biberon est adapté à chauffer un biberon comportant un récipient (1) et un fond (2) comprenant une plaque métallique (3).

Ce dispositif comprend un socle (5, 6) comportant une cavité (17), une plaque de chauffe (9) de faible épaisseur et une résistance électrique chauffante (10) en contact avec la plaque de chauffe (9), le fond (2) du biberon étant adapté à être emboîté dans la cavité (17). Le socle (5, 6) comporte des moyens élastiques (13) adaptés à maintenir la plaque de chauffe (9) en contact avec la plaque métallique (3) du biberon.

## Description

La présente invention concerne un dispositif de chauffage d'un biberon et un biberon adapté à un tel dispositif.

En général, les biberons sont chauffés par la technique du bain-marie, dans un chauffe-biberon spécifique ou plus simplement dans une casserole, par induction, par micro-ondes...

Ces techniques sont cependant fastidieuses à mettre en oeuvre, nécessitant un milieu intermédiaire de chauffe ou encore des sources de chauffage sophistiquées.

On connaît en outre un biberon tel que décrit dans le document DE 36 18 587 qui comporte une plaque métallique de chauffe dans son fond associée à un cylindre de cuivre formant un réservoir de chaleur.

Un tel biberon, qui peut être chauffé sur une plaque électrique classique, présente une grande inertie de chauffe. Il est par conséquent difficile de déterminer la température du contenu du biberon, celui-ci continuant de chauffer une fois le biberon retiré de la plaque électrique.

La présente invention a pour but de résoudre les inconvénients précités et de proposer un dispositif de chauffage qui permette une montée rapide en température du contenu du biberon et d'obtenir une stabilité en température du contenu du biberon dès l'arrêt du dispositif de chauffage.

Le dispositif de chauffage d'un biberon conforme à l'invention est adapté à un biberon comportant un récipient et un fond comprenant une plaque métallique.

Selon l'invention, ce dispositif de chauffage comprend un socle comportant une cavité, une plaque de chauffe de faible épaisseur et une résistance électrique chauffante en contact avec la plaque de chauffe, le fond du biberon étant adapté à être emboîté dans la cavité, et le socle comporte des moyens élastiques adaptés à maintenir ladite plaque de chauffe en contact avec la plaque métallique du biberon.

Du fait de la faible épaisseur de la plaque de chauffe et de la résistance en contact avec celle-ci, la plaque de chauffe peut monter très rapidement en température, sans aucune inertie de chauffe.

Un parfait contact thermique entre la plaque de chauffe et la plaque métallique du biberon est assuré par les moyens élastiques.

Le contact étroit des deux plaques et l'emboîtement du fond dans la cavité évitent toute déperdition de chaleur au niveau de la plaque de chauffe.

Ce dispositif de chauffe permet ainsi un très bon rendement énergétique.

De préférence, le fond du biberon est adapté à déplacer la plaque de chauffe contre une force de rappel exercée par les moyens élastiques, le socle comprenant un levier de blocage adapté à maintenir le fond du biberon emboîté dans la cavité du socle.

Le fond du biberon vient ainsi directement en appui contre la plaque de chauffe, le levier de blocage permettant de maintenir la plaque de chauffe et la plaque métallique du biberon en contact.

Les deux plaques sont ainsi maintenues dans un contact étroit grâce à la fois à la force de rappel des moyens élastiques et au levier de blocage.

Selon un autre aspect de l'invention, un biberon pour un dispositif de chauffage conforme à l'invention, est caractérisé en ce que la plaque métallique a une forme de coupelle.

Cette forme de coupelle permet d'augmenter la surface de plaque métallique chauffée en contact avec le contenu du biberon et de favoriser la montée en température du contenu.

D'autres particularités et avantages de l'invention apparaîtront également dans la description ci-après.

Aux dessins annexés, donnés à titre d'exemples non limitatifs :
- la figure 1 est une vue tronquée en coupe éclatée d'un biberon conforme à une première réalisation de l'invention ;
- la figure 2 est une vue tronquée en coupe d'un biberon avec son fond monté conforme à la réalisation de la figure 1 ;
- la figure 3 est une vue en coupe d'un fond amovible d'un biberon conforme à une seconde réalisation,
- la figure 4 est une vue en coupe d'un dispositif de chauffage conforme à l'invention, avant emboîtement du biberon ; et
- la figure 5 est une vue en coupe analogue à la figure 4, le biberon étant emboîté dans le dispositif de chauffage.

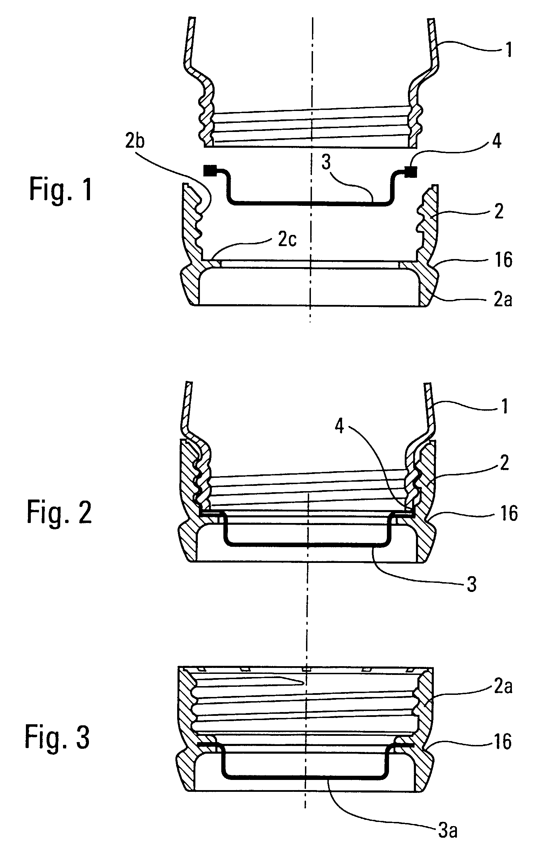

Un biberon conforme à l'invention va tout d'abord être décrit en référence aux figures 1 à 3.

Ce biberon comporte un corps 1 sensiblement cylindrique et un fond amovible 2, ce qui facilite son nettoyage.

Le corps 1 du biberon forme un récipient par exemple en matière plastique transparente, telle que du polycarbonate.

Le fond 2 comporte des moyens de fixation 2b pour fixer ce fond au corps du biberon. Ainsi, le fond amovible 2 peut être vissé au corps 1 du biberon.

Le fond 2 comporte une plaque métallique 3 qui a dans cet exemple une forme de coupelle.

Cette plaque métallique 3, qui est chauffée par un dispositif de chauffe qui sera décrit ci-après, permet de chauffer le contenu, par exemple du lait, du biberon.

La forme de coupelle permet au flux thermique de se propager dans les parois de la coupelle 3 et d'améliorer ainsi le chauffage du biberon.

Cette forme en coupelle présente aussi des avantages lors de l'emboîtement du biberon dans son dispositif de chauffe qui seront explicités plus loin.

Dans la réalisation des figures 1 et 2, le fond amovible est constitué d'une bague 2, la plaque métallique 3 étant maintenue par pincement entre un épaulement intérieur 2c de la bague 2 et le corps 1 du biberon.

Un joint 4, par exemple en silicone, est surmoulé à la périphérie de la coupelle, ladite périphérie venant en contact avec l'épaulement intérieur 2c de la bague 2.

Dans une variante illustrée à la figure 3, la plaque métallique 3 est fixée par surmoulage dans la bague 2.

La coupelle métallique peut être réalisée en acier inoxydable, en deux métaux différents colaminés tels que de l'acier inoxydable et de l'aluminium, ou en aluminium recouvert d'un revêtement compatible avec les aliments.

Cette coupelle métallique est de faible épaisseur, inférieure à 1 mm, et de préférence comprise entre 0,6 et 0,8 mm.

En outre, le fond 2 du biberon comprend une jupe périphérique 2a qui s'étend autour de la plaque métallique 3.

Le fond 2a comporte également une gorge périphérique 16 dont la fonction sera décrite ci-après.

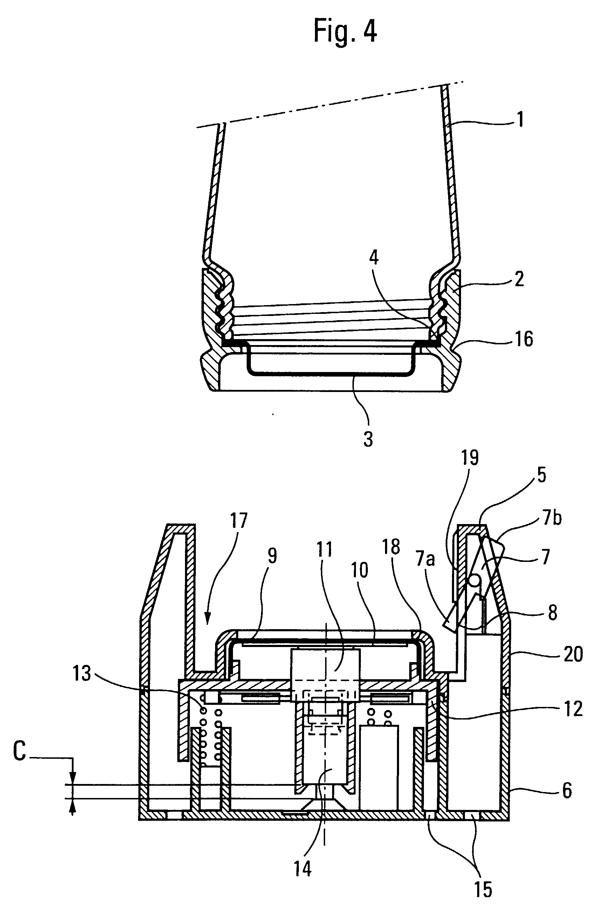

En référence à la figure 4, le dispositif de chauffage conforme à l'invention comprend un socle 5, 6 comportant une cavité 17, une plaque de chauffe 9 de faible épaisseur et une résistance électrique chauffante 10 en contact avec la plaque de chauffe 9.

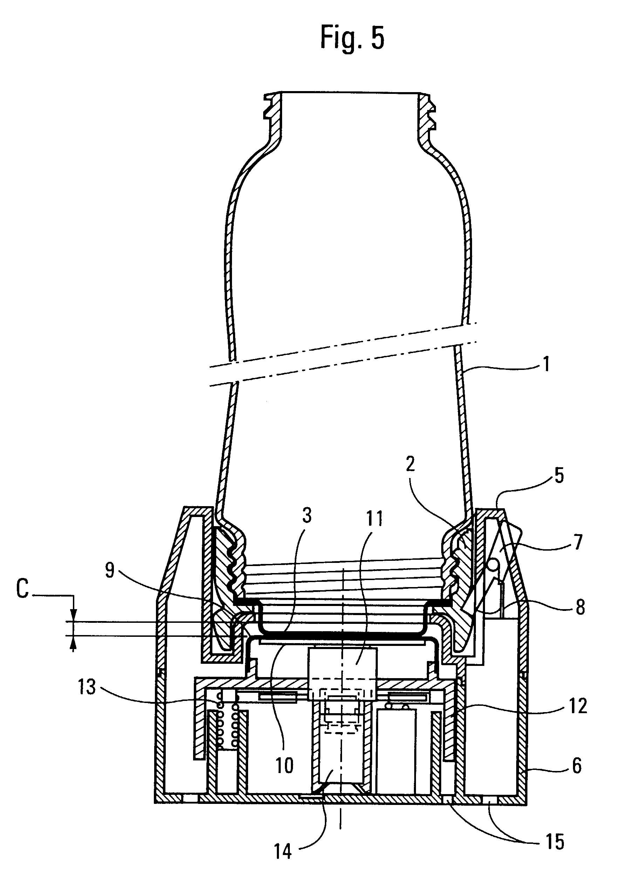

Comme illustré à la figure 5, le fond 2 du biberon est adapté à être emboîté dans la cavité 17 du socle 5, 6.

La jupe périphérique 2a du fond est adaptée à s'emboîter sur un bloc en saillie 18 de la cavité 17, de sorte que la jupe 2a du fond soit logée entre les parois intérieures 19 de la cavité 17 et le bloc en saillie 18.

Ce bloc en saillie 18 comprend une ouverture centrale sous laquelle s'étend la plaque de chauffe 9.

La coupelle métallique 3 du fond 2 du biberon peut être logée dans l'ouverture centrale du bloc en saillie 18 de manière à venir en contact avec la plaque de chauffe 9.

Ainsi, le fond 2 du biberon déplace, par l'intermédiaire de sa coupelle métallique 3, la plaque de chauffe 9 contre une face de rappel exercée par des moyens élastiques 13.

Ces moyens élastiques 13 comprennent dans cet exemple trois ressorts s'étendant entre le fond du socle 5, 6 et une platine 12 sur laquelle est montée, par encastrement par exemple, la plaque de chauffe 9.

Ces moyens élastiques 13 sont adaptés à maintenir la plaque de chauffe 9 en contact avec la plaque métallique 3 du biberon.

Afin de maintenir le biberon emboîté dans le socle 5, 6, contre la force de rappel élastique, le socle comprend un levier de blocage 7.

Ce levier de blocage 7 est monté en pivotement dans une paroi 19 de la cavité 17 du socle, un ressort 8, tel qu'un ressort à lame, maintenant le levier de blocage 7 en saillie dans la cavité 17.

Lors du passage du fond 2 du biberon, le levier de blocage est escamoté dans la paroi 19 du socle 5, 6, puis rappelé en saillie lorsque la gorge 16 prévue sur le fond du biberon vient en regard de ce levier de blocage.

Ainsi, une extrémité 7a du levier de blocage 7 est logée dans la gorge périphérique 16 du fond 2 du biberon, de sorte que le biberon est maintenu bloqué dans le dispositif de chauffage.

Ce levier de blocage permet de bloquer le biberon automatiquement lors de son introduction dans le dispositif de chauffe, la force de rappel exercée par le ressort 8 ne requérant aucune action de l'utilisateur.

Pour déverrouiller le levier de blocage, ce dernier comporte une seconde extrémité 7b qui forme une saillie sur la paroi extérieure 20 du socle 5, 6.

L'utilisateur peut déverrouiller le levier de blocage 7 en appuyant sur cette seconde extrémité 7b, de sorte que le levier de blocage 7 pivote et que sa première extrémité 7a soit délogée de la gorge 16 du fond 2 du biberon.

La plaque de chauffe 9 est en aluminium et a une épaisseur inférieure à 1 mm.

Cette épaisseur est de préférence comprise entre 0,6 et 0,8 mm.

Cette faible épaisseur permet d'éviter toute inertie de chauffe résiduelle lors de l'arrêt de la résistance électrique 10.

La résistance électrique 10 est du type extra-plate, d'une épaisseur comprise entre 1 et 2 mm.

Le dispositif de chauffe comprend également un interrupteur 14 solidaire en translation de la plaque de chauffe 9 et adapté à fermer un circuit d'alimentation en courant électrique de la résistance électrique chauffante 10 lorsque le fond 2 du biberon déplace la plaque de chauffe 9 contre une force de rappel exercée par les moyens élastiques 13.

De préférence, l'interrupteur 14 est monté sur la platine 12 qui supporte la plaque de chauffe 9.

Cet interrupteur 14 permet d'ouvrir le circuit électrique d'alimentation du dispositif dès que la plaque de chauffe 9 est dans sa position de repos et n'est pas sollicitée par le fond 2 du biberon.

Vice et versa, dès que le fond 2 du biberon est emboîté dans la cavité 17 du socle 5, 6 et que la plaque de chauffe 9 est déplacée contre la force de rappel des ressorts 13, l'interrupteur 14 est également déplacé vers le fond du socle 5, 6.

En fin de course, un micro-contacteur de l'interrupteur vient en contact avec un élément électrique du circuit d'alimentation en courant du dispositif afin de permettre l'alimentation électrique de la résistance 10.

De préférence, un thermostat 11 est en contact avec la plaque de chauffe 9 pour éviter la surchauffe du dispositif dans le cas où le biberon est emboîté sans lait ou eau à l'intérieur.

Grâce à cet interrupteur 11, la chauffe du biberon peut commencer dès que celui-ci est emboîté dans le socle 5, 6.

Les ressorts 3 permettent d'avoir une course c d'environ 3 mm afin de plaquer parfaitement la plaque de chauffe 9 sur la coupelle métallique 3 du biberon et pour faire fonctionner l'interrupteur.

La platine 12 permet de former un couvercle sur l'interrupteur 14 et le circuit d'alimentation électrique afin d'éviter toute infiltration d'eau.

Des trous 15 peuvent également être prévus dans le fond du socle 5, 6 pour évacuer l'eau qui aurait pu s'infiltrer.

Comme illustré à la figure 4, le socle 5, 6 est de préférence en deux parties, un fond 6 supportant l'ensemble des éléments électriques du dispositif et un corps 5, fixé au fond, dans lequel est formé la cavité 17.

Un voyant lumineux peut être monté en série avec le thermostat 11 pour indiquer la mise sous tension du dispositif et donner une indication de température.

Le fonctionnement du dispositif de chauffe va maintenant être décrit:

Grâce à la course c du sous-ensemble chauffant composé de la plaque de chauffe 9, de la résistance 10, de l'interrupteur 14, de la platine 12 et du thermostat 11, le biberon est « clipé » sur le socle. Il est verrouillé par le bouton 7 qui pivote autour de son axe lors de l'introduction du biberon et qui se bloque dans la gorge 16 du fond 2. L'interrupteur 14, en se déplaçant de la course c, ferme le circuit et permet le début de la chauffe si le module est branché sur une source de courant.

Pour arrêter le produit, il suffit : soit de débrancher le dispositif, soit de « déclipser » le biberon à l'aide du bouton 7.

Ce dispositif est par conséquent très simple d'utilisation et ne présente aucune inertie de chauffe résiduelle.

Ce dispositif de chauffe d'un biberon est complètement autonome. On peut le faire chauffer, soit sur le secteur 230 V ou dans la voiture en 13,5 V, sans l'inconvénient de l'eau du bain-marie. L'ensemble, de petite taille, est donc idéal pour le voyages.

Bien entendu, de nombreuses modifications pourront être apportées à l'exemple décrit ci-dessus, sans sortir du cadre de l'invention.

Ainsi, le fond à plaque métallique peut être solidaire du corps cylindrique du biberon, de sorte que le biberon ne possède plus de fond amovible.

## Revendications

1. Dispositif de chauffage d'un biberon, le biberon comportant un récipient (1) et un fond (2) comprenant une plaque métallique (3), caractérisé en ce qu'il comprend un socle (5, 6) comportant une cavité (7), une plaque de chauffe (9) de faible épaisseur et une résistance électrique chauffante (10) en contact avec la plaque de chauffe (9), le fond (2) du biberon étant adapté à être emboîté dans la cavité (17), et en ce que le socle (5, 6) comporte des moyens élastiques (13) adaptés à maintenir ladite plaque de chauffe (9) en contact avec la plaque métallique (3) du biberon.

2. Dispositif de chauffage conforme à la revendication 1, caractérisé en ce que le fond (2) du biberon est adapté à déplacer ladite plaque de chauffe (9) contre une force de rappel exercée par les moyens élastiques (13), le socle (5, 6) comprenant un levier de blocage (7) adapté à maintenir le fond (2) du biberon emboîté dans la cavité (17) du socle (5, 6).

3. Dispositif de chauffage conforme à la revendication 2, caractérisé en ce que le levier de blocage (7) est monté en pivotement dans une paroi (19) de ladite cavité (17) du socle, un ressort (8) maintenant ledit levier de blocage (7) en saillie dans la cavité (17).

4. Dispositif de chauffage conforme à l'une des revendications 1 à 3, caractérisé en ce que la plaque de chauffe (9) est en aluminium et à une épaisseur inférieure à 1 mm.

5. Dispositif conforme à la revendication 4, caractérisé en ce que la plaque de chauffe (9) a une épaisseur comprise entre 0, 6 et 0,8 mm.

6. Dispositif conforme à l'une des revendications 1 à 5, caractérisé en ce qu'il comprend un interrupteur (14) solidaire en translation de la plaque de chauffe (9) et adapté à fermer un circuit d'alimentation en courant électrique de la résistance électrique chauffante (10) lorsque le fond (2) du biberon déplace la plaque de chauffe (9) contre une force de rappel exercée par les moyens élastiques (13).

7. Biberon pour un dispositif de chauffage conforme à l'une des revendications 1 à 6, comportant un récipient (1) et un fond (2) comprenant une plaque métallique (3), caractérisé en ce que la plaque métallique (3) a une forme de coupelle.

8. Biberon conforme à la revendication 7, caractérisé en ce que le biberon a une corps (1) et un fond amovible (2) constitué d'une bague (2) comprenant des moyens de fixation (2b) pour fixer la bague (2) au corps (1) du biberon, la plaque métallique (3) étant maintenue par pincement entre un épaulement intérieur (2c) de la bague (2) et le corps (1) du biberon.

9. Biberon conforme à la revendication 7, caractérisé en ce que le biberon a un corps (1) et un fond amovible constitué d'une bague (2) comprenant des moyens de fixation (2b) pour fixer la bague (2) au corps (1) du biberon, la plaque métallique (3) étant fixée par surmoulage dans ladite bague (2).

10. Biberon conforme à l'une des revendications 7 à 9, caractérisé en ce que le fond (2) du biberon comprend une jupe périphérique (2a) s'étendant autour de la plaque métallique (3), adaptée à s'emboîter sur un bloc en saillie (18) de la cavité (17) dudit dispositif de chauffage, et une gorge périphérique (16) adaptée à loger une extrémité (7a) du levier de blocage (7).
